# EUROPEAN PATENT APPLICATION

(11) **EP 2 111 965 A1**
(43) Date of publication of application: **28.10.2009**
(21) Application number: 09008694.3
(22) Date of filing: 01.03.2006
(51) Int. Cl.: B29C 45/28, B29D 11/00

(54) **Resin molding method of optical component, mold apparatus, and gate bushing**

(30) Priority: 03.03.2005 JP 2005059354
(62) Divisional of application: 06715013.6
(71) Applicant: Sumitomo Heavy Industries, Ltd., Tokyo 141-8686 (JP)
(72) Inventor: Imatomi, Yoshiyuki, Chiba-shi Chiba 263-0001 (JP)
(74) Representative: Emde, Eric

(57) **Abstract**

A resin molding method for molding an optical component having an effective part where light is transmitted and a circumferential part provided at a circumference of the effective part, the resin molding method includes the steps of retracting a gate shutting pin so that resin is supplied in a cavity forming part of a mold apparatus; extending the gate shutting pin to inside the circumferential part of the optical component formed by making the resin solid in the cavity forming part, and stopping the gate shutting pin outside the effective part; cooling the resin in the cavity forming part so that the resin is made solid; retracting the pin to an outside the circumferential part of the optical component; and opening the mold apparatus so that the optical component is taken out.

## Description

### BACKGROUND OF THE INVENTION

### 1. Field of the Invention

The present invention generally relates to resin molding methods of optical components, mold apparatuses, and gate bushings. More particularly, the present invention relates to a molding method for molding a plastic article, such as a light guide plate, lens or prism, through which light is transmitted, a mold apparatus used for injection molding such a plastic article, and a gate bushing.

### 2. Description of the Related Art

Recently and continuing, a transparent resin having a stable property has been developed so that a molding technology of such a resin has been developed. Because of this, a plastic lens has been used as a lens of an optical device such as an optical head of a CD player, a video camera, a portable phone having a camera, or the like.

For example, a small size plastic lens has been often used for a camera mechanism of a portable phone having the camera. In a case where such a plastic lens is molded by an injection molding machine, the molding is generally used for obtaining plural molded articles. For example, four through six plastic lenses are molded by a single mold. See Japanese Laid-Open Patent Application Publication No. 7-266391, for example.

Plural plastic lenses molded by a single molding cycle are connected to each other by a runner. The runner is a resin solid in a path for leading molten resin from an resin inlet opening of the mold to a gate that is an entrance of a cavity forming part. The runner is an unnecessary part of the molded article. Therefore, after being taken out from the mold, the plastic lenses connected to each other by the runner are cut from the runner at the part by the gate so as to be pieces of the plastic lens. In addition, the light guide plate configured to reflect light from a light source at a circumference in a picture direction is used for the portable phone or a liquid crystal display.

In the conventional molding method, since the runner is always formed in a molded article such as the plastic lenses, the runner is required to be cut. If the size of the plastic lenses is small, the resin amount of the runner may be greater than the resin amount of the plastic lenses. In other words, the ratio of the resin amount of the runner to all the resin in the mold is large. Hence, the resin amount of the actual molded article is greater than the resin amount of a discarded part.

Since it is necessary for the resin used for an optical component such as the plastic lens to have high transparency and stability, the resin may be expensive. Accordingly, if the discarded amount is large as discussed above, the manufacturing cost of the plastic lens may be high.

In addition, in the case where the molded articles are connected by the runner, a process for cutting off the runner after the molded articles are taken out from the mold is required. Therefore, if such a process can be omitted, the manufacturing cost may be reduced.

### SUMMARY OF THE INVENTION

Accordingly, embodiments of the present invention may provide a novel and useful resin molding method of an optical component, mold clamping, and gate bushing.

More specifically, the embodiments of the present invention may provide a molding method of a resin optical component wherein no useless part is made as a runner, a mold apparatus realizing such a molding method, and a gate bushing.

One aspect of the present invention may be to provide a resin molding method for molding an optical component having an effective part where light is transmitted and a circumferential part provided at a circumference of the effective part, the resin molding method including the steps of: retracting a gate shutting pin so that resin is supplied in a cavity forming part of a mold apparatus; extending the gate shutting pin to inside the circumferential part of the optical component formed by making the resin solid in the cavity forming part, and stopping the gate shutting pin outside the effective part; cooling the resin in the cavity forming part so that the resin is made solid; retracting the pin to an outside the circumferential part of the optical component; and opening the mold apparatus so that the optical component is taken out.

The other aspect of the present invention may be to provide a mold apparatus for injection molding an optical component having an effective part where light is transmitted and a circumferential part provided at a circumference of the effective part, the mold apparatus including: a movable mold and a stationary mold configured to form a cavity forming part, the cavity forming part defining an external configuration of the optical component when the mold apparatus is closed; a gate configured to open at a parting surface of the stationary mold; and a pin movably provided in the gate, the pin being configured to open and shut the gate; wherein a position of the pin is controlled so that the pin projects from the parting surface to a side of the cavity forming part but stops in an area where the pin does not reach the effective part.

The other aspect of the present invention may be to provide a mold apparatus for molding an optical component having an effective part where light is transmitted and a circumferential part provided at a circumference of the effective part, the mold apparatus including: a core configured to form an effective surface of the optical component when the mold apparatus is closed; a gate configured to open at a parting surface of a stationary mold; a pin movably provided in the gate, the pin being configured to open and shut the gate; and a gate bushing provided at a circumference of the gate and supporting a head end of the gate; wherein at least a part of a cavity surface of the gate bushing forming a part of the cavity forming part has a configuration corresponding to a configuration of the core.

The other aspect of the present invention may be to provide a gate bushing provided in a mold apparatus, the gate bushing supporting a head end of a gate, the gate having an inside where a pin is movably provided, the pin being configured to open and shut the gate, the gate bushing including: a cavity surface forming a part of a cavity forming part formed inside of the mold apparatus;
wherein at least a part of the cavity surface has a curved surface having a configuration corresponding to a configuration of a core forming an effective surface of an optical component, the optical component being molded by using the mold apparatus.

According to the embodiments of the present invention, a molding method of a resin optical component wherein no useless part is made as a runner, a mold apparatus realizing such a molding method, and a gate bushing can be provided.

Other objects, features, and advantages of the present invention will become more apparent from the following detailed description when read in conjunction with the accompanying drawings.

### BRIEF DESCRIPTION OF THE DRAWINGS

FIG. 1 is a side view of an injection molding machine for injection molding of an embodiment of the present invention;
FIG. 2 is a cross-sectional view showing a part of a mold apparatus of the embodiment of the present invention;
FIG. 3 is a view showing a convex lens as an example of a molded article shown in FIG. 2;
FIG 4 is a view for explaining a position of a valve in a position control of a gate valve by a two-stage cylinder;
FIG. 5 is a view for explaining position relationship between the position of the valve shown in FIG. 4 and a molded article;
FIG. 6 is a view showing a concave lens as an example of a molded article molded by a mold apparatus of the embodiment of the present invention;
FIG. 7 is a view showing a rectangular-shaped concave lens as the example of the molded article molded by the mold apparatus of the embodiment of the present invention;
FIG. 8 is a view showing a prism as the example of the molded article molded by the mold apparatus of the embodiment of the present invention; and
FIG. 9 is a view for explaining a structure of a gate bushing for molding a molded article having a main surface whose external configuration is circular shaped.

### DETAILED DESCRIPTION OF THE PREFERRED EMBODIMENT

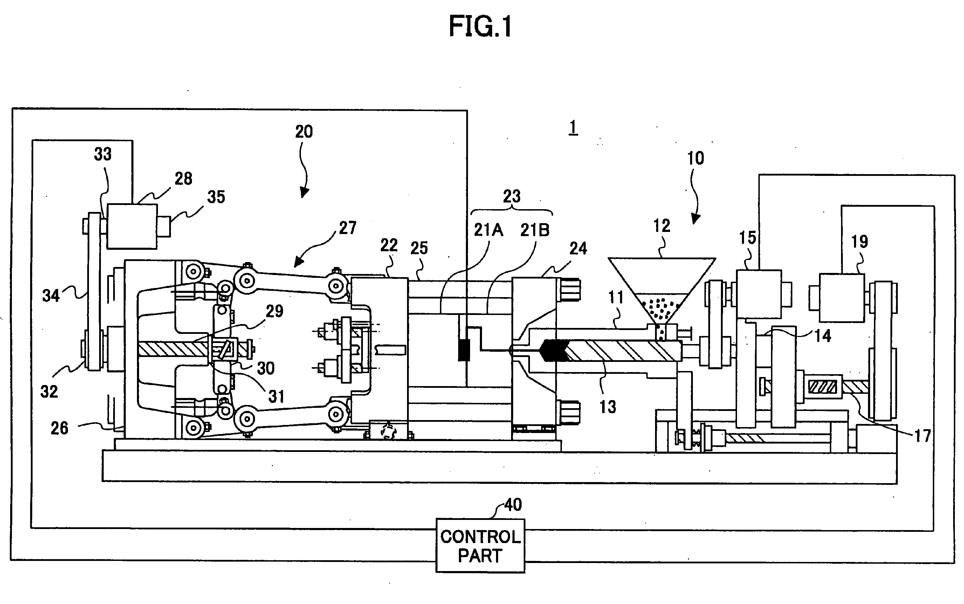

A description of injection molding of a plastic lens of an embodiment of the present invention will now be given, with reference to FIGS. 1 through 9, of embodiments of the present invention.

First, a schematic structure of an injection molding machine for injection-molding of the embodiment of the present invention is discussed with reference to FIG. 1. Here, FIG. 1 is a side view of an injection molding machine for injection molding of an embodiment of the present invention.

Referring to FIG. 1, an electric injection molding machine 1 includes an injection apparatus 10 and a mold clamping apparatus 20.

The injection apparatus 10 includes a heating cylinder 11. A hopper 12 is disposed on the heating cylinder 11. A screw 13 is disposed inside the heating cylinder 11 so that the screw 13 can be rotated with respect to an axis and can be advanced and retracted. A rear end part of the screw 13 is supported by a support member 14 so that the screw 13 can be rotated. A metering motor 15 such as a servo motor is mounted on the support member 14 as a driving part. The rotation of the metering motor 15 is transmitted to the screw 13 as a driven part by a timing belt supplied at an output shaft of the metering motor 15.

The injection apparatus 10 also includes a screw shaft 17 provided parallel to the screw 13 so that the screw shaft 17 can be rotated. An end part of the screw shaft 17 is connected to an injection motor 19 by a timing belt supplied at an output shaft of the injection motor 19 such as a servo motor. Hence, the screw shaft 17 is rotated by the injection motor 19. A nut fixed to the support member 14 is mated to and slidably engaged with a front end part of the screw shaft 17. Accordingly, the injection motor 19 is driven as a driving part in order to rotate the screw shaft 17 by the timing belt so that the support member 14 can be advanced or retracted. As a result of this, the screw 13 as a driven part can be advanced or retracted.

The mold clamping apparatus 20 includes a movable platen 22 where a movable mold 21A is attached and a stationary platen 24 where a stationary mold 21B is attached. The movable mold 21A and the stationary mold 21B form a mold apparatus 23 discussed below of the embodiment of the present invention.

The movable platen 22 is connected to the stationary platen 24 by tie bars 25. The movable platen 22 can slide along the tie bars 25. The mold clamping apparatus 20 also includes a toggle mechanism 27. One end of the toggle mechanism 27 is connected to the movable platen 22 and the other end of the toggle mechanism 27 is connected to a toggle support 26.

A ball screw shaft 29 is supported at a center of the toggle support 26 so as to be capable of rotating. A nut 31, provided at a cross head 30 that is disposed at the toggle mechanism 27, is mated to and slidably engaged with the ball screw shaft 29. A pulley 32 is provided at a rear end part of the ball screw shaft 29. A timing belt is stretched and provided between the pulley 32 and an output shaft of a mold clamping motor 28 such as a servo motor.

Accordingly, in the mold clamping apparatus 20, when the mold clamping motor 28 is driven as a driving part, rotation of the mold clamping motor 28 is transmitted to the ball screw shaft 29 as a driving transmission part by the timing belt 34.

Furthermore, the motion direction is converted from a rotational motion to a rectilinear motion by the ball screw shaft 29 and the nut 31 so that the toggle mechanism 27 is acted upon. Based on the toggle mechanism 27 being acted on, the movable platen 22 slides along the tie bars 25 so that the movable mold 21A is closed to, clamped to, or opened from the stationary mold 21B. A position detector 35 is directly connected with a rear end part of the output shaft 33 of the mold clamping motor 28. The position detector 35 detects the number of rotations and the amount of rotation of the mold clamping motor 28 so as to determine the position of the cross head 30 that is advanced or retracted based on the rotation of the ball screw shaft 29 or the position of the movable platen 22 as a driven part that is connected to the cross head 30 by the toggle mechanism 27.

In addition, in the embodiment of the present invention, a control part 40 is provided at the electric injection molding machine 1. The control part 40 controls the metering motor 15 and the injection motor 19 of the injection apparatus 10 and the mold clamping motor 28 of the mold clamping apparatus 20. In addition, the control part 40 controls operation of the valve of a gate valve mechanism provided at the mold apparatus 23 as discussed below.

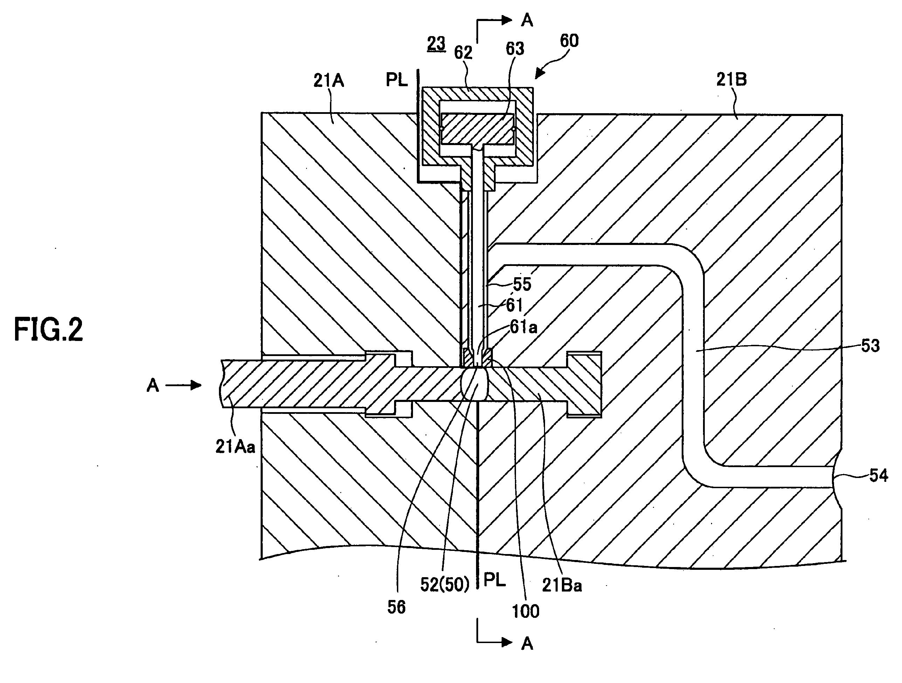

Next, the mold apparatus 23 of the embodiment of the present invention is discussed with reference to FIG. 2. FIG. 2 is a cross-sectional view showing a part of the mold apparatus 23 of the embodiment of the present invention. The mold apparatus 23 is a so-called hot runner type mold apparatus. Hence, in this mold apparatus 23, a runner part (solid resin part) formed with a molded article in a normal cold runner method is not formed.

In the hot runner method, a runner part in the mold is always heated so as to be kept in a molten state. Therefore, in a case where the molten resin in the cavity forming part of the mold is cooled and made solid, it is necessary to provide a mechanism for shutting off the runner from a molded article part being made solid in the cavity forming part. The mechanism for shutting off corresponds to a gate valve mechanism 60 of the embodiment of the present invention shown in FIG. 2.

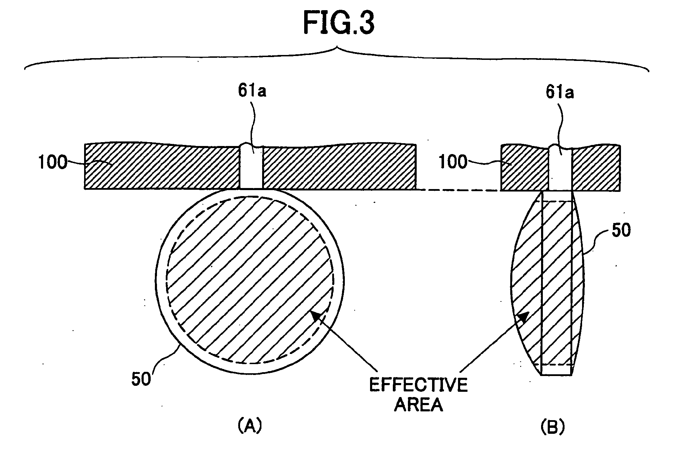

The mold apparatus 23 of the embodiment of the present invention is a mold whereby a plastic convex lens 50 shown in FIG. 3 is molded by injection molding. However, the molded article is not limited to a convex lens. As discussed below, the present invention can be applied to a mold apparatus for molding various kinds of optical components. Here, FIG. 3 is a view showing the convex lens as an example of a molded article shown in FIG. 2. More specifically, FIG. 3-(A) is a front view of the convex lens 50. FIG. 3-(B) is a cross-sectional view of the convex lens 50.

Referring back to FIG. 2, a border (in other words, a parting line) of the movable mold 21A and the stationary mold 21B is shown by a wide line PL. The movable mold 21A is situated at the left side of the wide line PL. The stationary mold 21B is situated at the right side of the wide line PL. A mold closed state of the mold apparatus 23 is shown in FIG. 2. For mold opening, the movable mold 21A is moved in a left direction in FIG. 2.

A core part 21Ba for forming an external shape of the molded article is provided in the stationary mold 21B. A core part 21Aa for forming an external shape of the molded article is provided in the movable mold 21A. The cavity forming part 52 is formed by the core part 21Aa and the core part 21Ba when the mold apparatus 23 is closed.

The molten resin is supplied in the cavity forming part 52 and then cooled and made solid so that the convex lens 50 shown in FIG. 3 is formed. If the movable mold 21A is moved for mold opening after the molten resin is made solid in the mold apparatus 23 and the convex lens 50 is made, the core part 21Aa is moved to a right side against the movable mold 21A in connection with the movement of the movable mold 21A. As a result of this, the solid convex lens 50 in the cavity forming part 52 is taken out from the movable mold 21A.

The molten resin is supplied from the injection apparatus 10 shown in FIG. 1 to the stationary mold 21B. A path (hereinafter "runner") 53 is formed so that the molten resin is guided to flow to the cavity forming part 52.

A heater for heating the runner 53 is provided in a periphery of the runner 53 so that the molten state of the resin in the runner 53 can be maintained. Based on a detected value of a temperature sensor embedded in the stationary mold 21B, the temperature of the mold is controlled. One end of the runner 53 is connected to a nozzle touch part 54 formed at a side surface of the stationary mold 21B. A nozzle situated at a head end of the heating cylinder 11 of the injection apparatus 10 shown in Fig. 1 is connected to the nozzle touch part 54 so that the resin metered and made molten by the heating cylinder 11 is supplied to the runner 53. The other end of the runner 53 is connected to a gate path 55. The gate path 55 is connected to the cavity forming part 52 via a gate 56 surrounded by a gate bushing 100. The gate bushing 100 together with the head end of the gate 56 opens or shuts the flow path of the resin.

Under this structure, a substantially plane surface of the gate bushing 100 (a lower surface of the gate bushing 100 in FIG. 2) and the head end part of the gate 56 form a part of the cavity forming part 52 (an upper surface part of the cavity forming part 52 in FIG. 2). The molten resin supplied in the runner 53 passes the gate path 55 and the gate 56 so as to fill in the cavity forming part 52. Here, as discussed above, the gate valve mechanism 60 is provided at the gate path 55 so that the gate 56 can be opened or closed.

The gate valve mechanism 60 includes a valve 61 and a driving mechanism 62. The valve 61 as a shutting-off part is movably positioned in the gate path 55. The driving mechanism 62 drives the valve 61. A pin 61a at a head end part of the valve 61 has an outer diameter where the pin 61a is provided in the gate 56 and can move in an inner diameter of the gate 56. In a case where the pin 61a is inserted in the gate 56, the gate 56 is closed so as to shut off the gate path 56 and the cavity forming part 52. The pin 61a is inserted in the gate 56 so that the gate 56 is closed as shown in FIG. 2.

The driving mechanism 62 of the gate valve mechanism 60 is formed of an air cylinder capable of reciprocally moving. The valve 61 is fixed to a piston 63, or the valve 61 is formed with the piston 63 in a body. By supplying compressed air to the air cylinder 62 so as to drive the air cylinder 62, the piston 63 is moved and thereby the valve 61 can be moved in a shaft direction.

In the embodiment of the present invention, the moving direction of the valve 61 is parallel with the parting line PL as shown in FIG. 2 and perpendicular to the opening and closing directions of the mold apparatus 23. The gate 56 is positioned on the parting line. Normally, it is difficult to secure precision or quality of a surface (hereinafter "parting surface") of the molded article, the surface corresponding to the parting line PL. Hence, it is not necessary for the surface to have functions. Under the structure shown in FIG. 2, it is possible to open the gate 56 to the parting surface.

Thus, when the mold apparatus 23 is opened, the parting surface of the molded article is moved while the parting surface of the molded article comes in contact with a surface forming the cavity forming part 52 of the mold. Therefore, if the pin 61a of the valve 61 projects even slightly into the convex lens 50 (the cavity forming part 52), the molded article is taken out from the stationary mold 21B while the convex lens 50 may be hung by the pin 61a of the valve 61. Hence, the convex lens 50 may be scratched so that the convex lens 50 may be damaged. Accordingly, when the mold apparatus 23 is opened, the position of the head end surface of the pin 61a of the valve 61 should be the same as the position of the internal surface of the cavity forming part 52 or retracted from the position of the internal surface of the cavity forming part 52.

On the other hand, in a case where the head end surface of the pin 61a of the valve 61 is retracted from the internal surface of the cavity forming part 52 even slightly when the pin 61a is inserted in the gate 56 so that supplying the molten resin to the cavity forming part 52 is stopped, the space in the gate 56 formed by such a retracting movement is connected to the cavity forming part 52. Hence, the molten resin fills in the space in the gate 56. The molten resin filling in the space in the gate 56 is made solid in a body with the molded article. Therefore, the resin made solid in the gate 56 projects inside of the surface of the stationary mold 21B forming the cavity forming part 52 when the mold apparatus 32 is opened. Accordingly, when the mold apparatus 23 is opened, the projection part may hang up on the stationary mold 21B so that the molded article may not be easily taken out from the stationary mold 21B.

In considering such a problem, the stopping position of the pin 61a, namely the valve 61, should be controlled so that the position of the head end surface of the pin 61a is the same as (flush with) the position of the top of the surface forming the cavity forming part 52 with high precision when the gate 56 is closed by the pin 61a. Accordingly, in the embodiment of the present invention as shown in FIG. 1, the control part 40 of the injection molding machine 1 controls the gate valve mechanism 60 so that the position of the valve 61 when closing the gate 56 and stopping the resin flow is controlled with high precision.

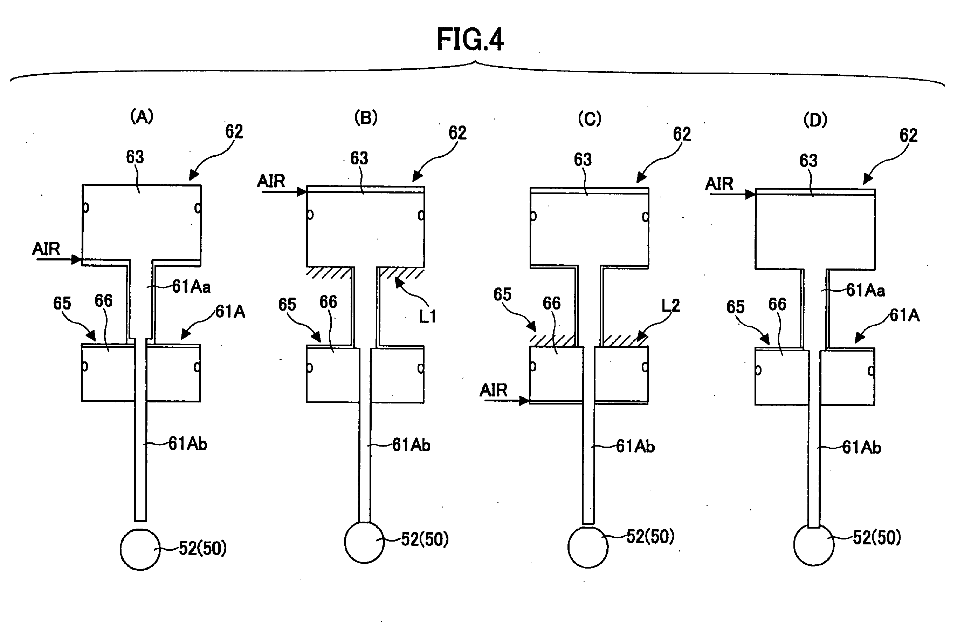

In the meantime, even if the position where the valve 61 closes the gate 56 and stops the flow is controlled with high precision, there may be a integrated error of measurement of the parts of the mold apparatus 23 and the parts of the gate valve mechanism 60. Hence, it may be difficult to make the position of the head end surface of the pin 61a the same as the position of the top surface of the cavity forming part 52. Hence, the driving mechanism 62 of the gate valve mechanism 60 may be a two-stage cylinder as shown in FIG. 4 so that the position of the head end surface the pin 61a is controlled corresponding to opening and closing operations of the gate valve.

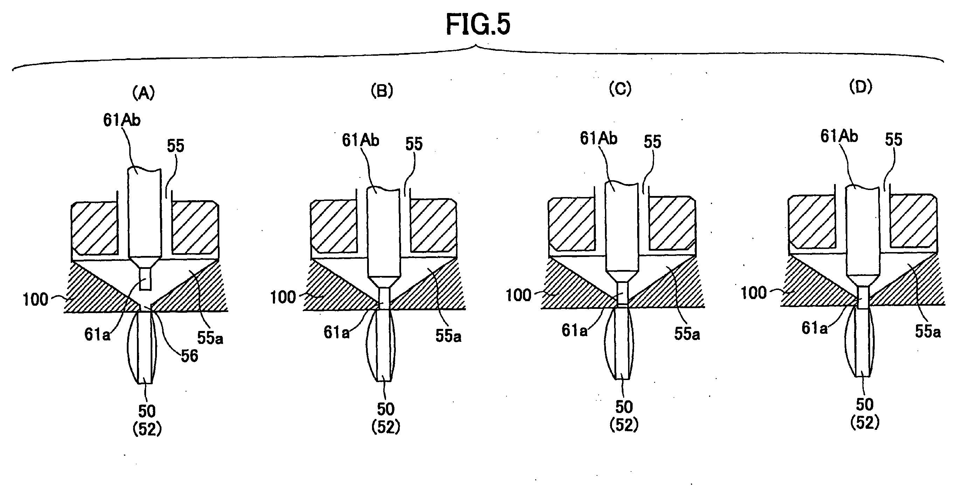

Here, the control of the position of the head end surface of the pin 61a by the two-stage cylinder is discussed with reference to FIG. 4 and FIG. 5. FIG 4 is a view for explaining the position of the valve 61A in a position control operation of the gate valve by the two-stage cylinder. FIG. 5 is a view for explaining the positional relationship between the position of the valve shown in FIG. 4 and the molded article.

The two-stage cylinder and the valve 16A are schematically shown in FIG. 4. The purpose of illustrations of FIG. 4 is explaining the operation and therefore illustrations of a cylinder part or other parts of the air cylinder are omitted in FIG. 4. Furthermore, the illustration of the pin 61a (See FIG. 5) provided at the head end of the valve 61A is simplified in FIG. 4 so that the diameter of the pin 61a is shown by the same external diameter of the valve 61A. Therefore, the head end surface of the valve 61A shown in FIG. 4 corresponds to the head end surface of the pin 61a shown in FIG. 5.

As the two-stage cylinder, in addition to an air cylinder 62 shown in FIG. 2 as a first driving part, a supplemental air cylinder is provided between the air cylinder 62 and the gate 56 as a second driving part. In FIG. 4, the cylinder part of the supplemental cylinder is not illustrated but only a piston 66 in the supplemental air cylinder is illustrated.

The supplemental cylinder 65 is for minute moving the valve 61A. For moving the valve 61A by the supplemental air cylinder 65, the valve 61A includes a large diameter part 61Aa and a small diameter part 61Ab.

First, in order to open the gate 56 so that the resin is supplied in the cavity forming part 52, as shown in FIG. 4-(A), compressed air is supplied to a front side of the air cylinder 62 so that the valve 61A is retracted. At this time, since the small diameter part 61Ab of the valve 61A pierces the piston 66, the valve 61A can be retracted without restriction of the piston 66. FIG. 5-(A) shows details of the position of the valve 61A at this time. In FIG. 5, a resin collecting part 55a is provided at a head end part of the path 55, namely at a front of the gate 56. The resin collecting part 55a is a space where the molten resin is held. The resin collecting part 55a prevents movement of heat when a side of the path 55 is heated and a side of the cavity forming part 52 is cooled where the resin forms a heat insulating layer.

After the gate 56 is opened so that the molten resin is supplied in the cavity forming part 52 and a dwelling process is applied at a designated pressure, as shown in FIG. 4-(B), the compressed air is supplied to a rear side of the air cylinder 62 so that the valve is advanced and the gate 56 is closed. At this time, it is preferable that the position of the head end surface of the pin 61a of the valve 61A be controlled so as to be the same as the position of the upper internal surface of the cavity forming part 52. The position of the head end surface of the pin 61a of the valve 61A is the same as the position of the upper internal surface of the cavity forming part 52 as shown in FIG. 5-(B). However, since it is difficult for the position of the head end surface of the pin 61a to be completely the same as the position of the internal surface of the cavity forming part 52, as shown in FIG. 4-(D), the valve 61A may be advanced until the pin 61a slightly projects in the cavity forming part 52. Where the pin 61a slightly projects in the cavity forming part 52 is shown in FIG. 5-(C).

In the above discussed operations, the valve 61A is moved by the air from the air cylinder 62. By restricting the movement of the piston 63 of the air cylinder 62, namely a movement in the direction where the gate 56 is shut off, the position of the head end surface of the pin 61a where the gate 56 is shut off (See FIG. 4-(B) or FIG. 4-(D)) can be controlled with high precision. In other words, the position of the head end surface of the pin 61a can be controlled with high precision by providing a first control part L1 configured to control the stroke of the piston 63 of the air cylinder 62. In addition, a dwell pressure may be applied to the convex lens 50 by the core part 21Aa. In this case, after the molten resin is supplied in the cavity forming part 52, the valve 61A is advanced. Therefore, even if the dwelling pressure is applied by the core part 21Aa after the filling process, the resin in the cavity forming part 52 does not flow backward to the runner.

As shown in FIG. 4-(B) or FIG. 4-(D), the resin in the cavity forming part 52 is cooled and made solid. As shown in FIG. 4-(B) and FIG. 5-(B), the mold apparatus 23 is opened so that the molded article can be taken out from the mold apparatus 23. However, as shown in FIG. 4-(D) and FIG. 5-(D), the pin 61a is extended so that there may be a problem when the molded article is taken out from the stationary mold 21B.

Because of this, after the resin in the cavity forming part is made solid as shown in FIG. 4-(B) or FIG. 4-(D), the compressed air is supplied to a front side of the air cylinder 65 so that the piston 66 is slightly retracted as shown in FIG. 4-(D). By movement of the piston 66, the valve 61A is slightly retracted so that the pin 61a situated at the head end of the valve 61A is, as shown in FIG. 5-(C), is moved to the side of the valve 61A. At this time, since movement of the pin 61a is extremely small, the gate 56 is not opened and the molten resin in the gate path 55 does not flow to the side of the cavity forming part 52. In addition, the resin in the cavity forming part 52 is already made solid, so that only a small hollow is made at a part corresponding to the pin 61a of the molded article after the pin 61a is retracted, and the resin of the molded article is not taken in the gate 56.

Accordingly, even if the mold apparatus 23 is opened as shown in FIG. 4-(C) or FIG. 5-(C), the pin 61a is not hung and the resin projecting to the gate 56 is not hung so that the molded article can be taken out from the mold apparatus 23.

In the above-discussed operations, the minute movement of the valve 61A is implemented by the air cylinder 65. By restricting the movement of the piston 66 of the air cylinder 65, namely a movement in a direction where the gate 56 is opened, the position where the head end surface of the pin 61a is slightly taken into the gate 56 while the gate 56 is shut off (See FIG. 4-(C)) can be controlled with a high precision. In other words, the position of the head end surface of the pin 61a can be controlled with high precision by providing a second control part L2 configured to control the stroke of the piston 66 of the air cylinder 65.

While the small hollow is made at a part of the molded article where the pin 61a projects as discussed above, it is possible to prevent damage affecting the function of the molded article by making the projection length of the pin 61a minute so that the pin 61a does not reach to an effective part of the molded article.

The convex lens 50 shown in FIG. 3 has a cylindrical-shaped configuration. A plane surface of the convex lens 50 is provided at a part of the gate 56. The effective part of the convex lens 50 is where hatching is applied in FIG. 3. An external circumferential part situated outside of the effective part is not actually used. Most of the optical components such as lenses where light is transmitted have the external circumferential parts situated outside of the effective parts. Therefore, as shown in FIG. 4-(D), even if the pin 61a makes inroads into the molded article, as long as the pin 61a is situated at the external circumferential part, namely at a distance where the pin 61a does not reach the effective part, there is no influence on the function of the molded article.

Thus, in the embodiment of the present invention, the molded article can be formed without forming the solid runner part by using the optical component having the effective part smaller than the external configuration, providing the gate at the parting surface of the optical component, and supplying the resin in the hot runner method. Accordingly, the runner part is not wasted as in the conventional art so that expensive resin is not wasted as the runner part. Hence, it is possible to reduce the manufacturing cost of the molded article. In addition, a process for cutting off the runner part from the molded article is not necessary in the embodiment of the present invention, and thereby the manufacturing cost can be further reduced.

In addition, while an example where the gate valve mechanism 60 is arranged in parallel with the parting line PL is discussed in the embodiment of the present invention, the gate valve mechanism 60 may be arranged perpendicular to the parting line PL. In this case, the cores 21Aa and 21Ba are arranged in a direction perpendicular to the opening and closing directions of the mold. By using an angular pin, at least one of the cores 21Aa and 21Ab may be moved in a direction perpendicular to the mold opening direction at the same time when the mold apparatus is opened. In this case, the pin 60a of the gate valve mechanism 60 can make inroads within the external circumferential surface of the convex lens 50. As a result of this, since expensive resin is not wasted as the runner part, it is possible to reduce the manufacturing cost of the molded article.

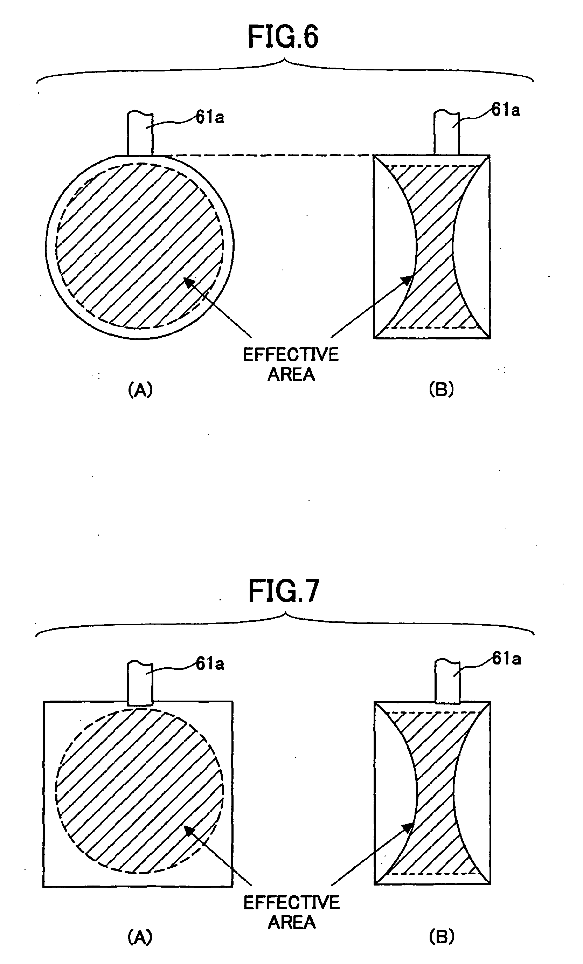

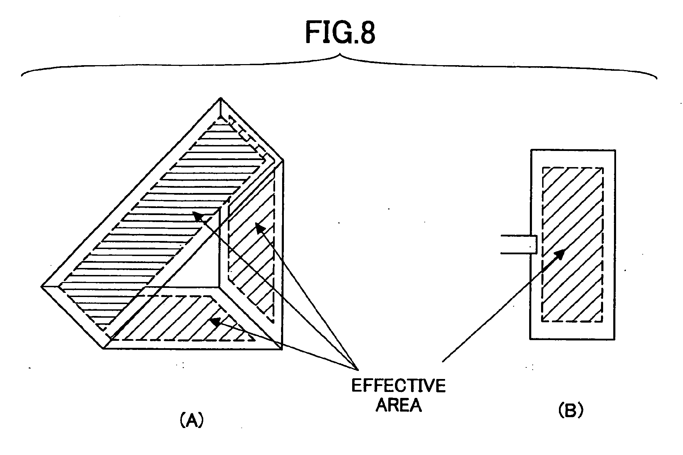

There are, for example, the convex lens shown in FIG. 6, a rectangular concave lens shown in FIG. 7, a prism shown in FIG. 8 and others as examples of the optical component formed by applying the mold apparatus of the embodiment of the present invention. However, the present invention is not limited to these examples. The present invention can be applied to molding of other various optical components.

In addition, in the above-discussed embodiment, the air cylinder is used as a driving source for driving the valve. However, the present invention is not limited to this example. A driving mechanism formed by combining a rotational motor and a liner driving mechanism or a linear motor may be used.

Meanwhile, in the above-discussed embodiment, a lower surface of the gate bushing 100 forming the cavity forming part 52 is a substantially plane surface. In addition, a lower surface of the head end part of the pin 61a of the valve 61 movably provided in the gate 56 surrounded by the gate bushing 100 is also a substantially plane surface.

However, if the lower surface of the gate bushing 100 is a plane surface and the lens (See FIG. 3) having a main surface where an optical effective area is formed in a circular shape is formed, a liner part is formed at a portion of the external circumferential part of the main surface where the gate bushing 100 and the pin 61a come in contact. Furthermore, if the lower surface of the head end part of the pin 61a is a plane surface, the convex part may be formed at the above-mentioned portion. Accordingly, it is not possible to mold the molded article such as a lens having the circular shaped external configuration main surface.

As a method for solving this problem, for example, the configuration of the head end part of the pin 61a may be formed in accordance with the external configuration of the main surface of the molded article. However, the processing of this method is not simple. In addition, even if the configuration of the head end part of the pin 61a can be formed in accordance with the external configuration of the main surface of the molded article, the valve 61 is rotated so that it is difficult to implement precise positioning of the pin 61a.

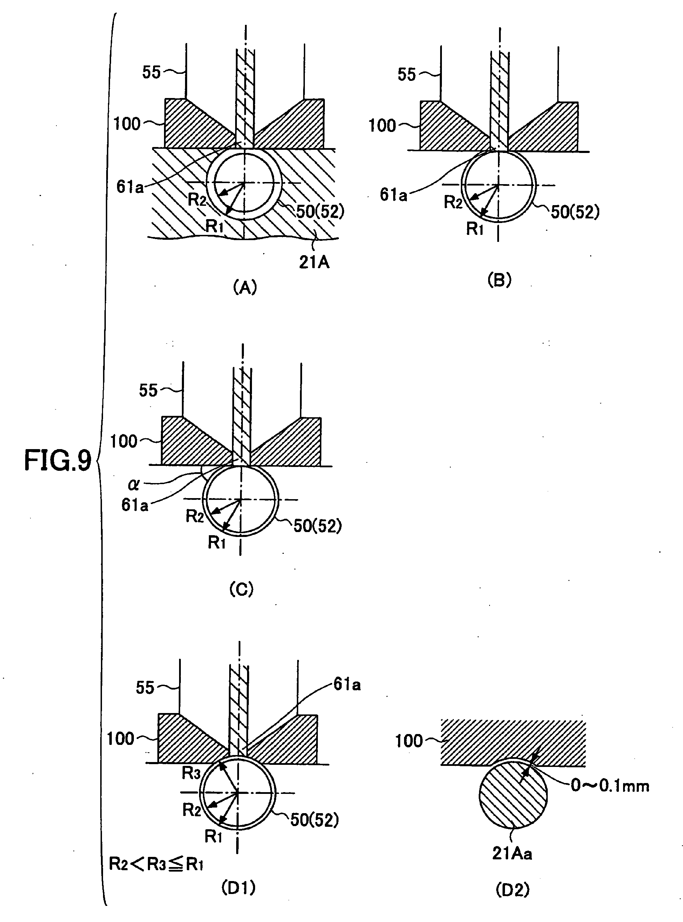

Accordingly, in an embodiment of the present invention, the gate bushing 100 has a structure shown in FIG. 9, so that the molded article such as the lens can have a circular-shaped external main surface.

FIG. 9 is a view for explaining a structure of a gate bushing for molding a molded article having the circular shaped external configuration main surface and shows a cross section taken along A-A of a main part shown in FIG. 2.

In the cross section shown in FIG. 9, the cavity 52 includes the gate bushing 100, the pin 61a, the core part 21Aa, the movable mold 21A or the stationary mold 21B not illustrated in FIG. 9.

FIG. 9-(A) shows a case where an optical effective diameter R₂ is smaller than an external diameter R₁ in the lens 50 having a substantially D shaped configuration where a line part is formed at the external configuration. An optical effective area (surface) is formed so as to give a circular-shaped configuration.

In this case, since the lower surface of the gate bushing 100 is a plane surface, it is possible to easily process the gate bushing 100 and form a plane configuration of the head end part of the pin 61a. In addition, a linear part can be largely formed at a part of the external circumferential part of the lens 50 where the gate bushing 100 and the pin 61a come in contact.

FIG. 9-(B) and FIG. 9-(C) show a case where the optical effective diameter R₂ is smaller than the external diameter R₁ in the lens 50 having a circular-shaped optical effective area (surface) and, as compared to the case shown in FIG. 9-(A), the value of the optical effective diameter R₂ is close to the value of the external diameter R₁.

In this case, as well as the case shown in FIG. 9-(A), since the lower surface of the gate bushing 100 is a plane surface, it is possible to easily process the gate bushing 100 and form a plane configuration of the head end part of the pin 61a. In addition, a lens having a greater optical effective diameter R₂ can be molded.

However, if the optical effective diameter R₂ is made large where the linear part shown in FIG. 9-(A) is formed, an end part of the movable mold 21A shown by "α" in FIG. 9-(C) may have a sharp angle so that a sharp edge is formed. As a result of this, the sharp edge part of the mold may be broken and processing may be difficult.

Accordingly, as shown in FIG. 9-(D1), a part of the lower surface of the gate bushing 100 may not be a plane surface but have a configuration corresponding to a configuration of the molded article. More specifically, as shown in FIG. 9-(D2), a surface forming a cavity surface of the gate bushing 100 is formed so as to have a designated curvature corresponding to a configuration of the core part 21Aa. In addition, a gap having a length greater than 0 and smaller than approximately 0.1 mm, is formed between the cavity surface of the gate bushing 100 and the external configuration of the core part 21Aa. If the gap is too wide, a burr may be generated at the molded article. Hence, it is preferable for the gap between the gate bushing 100 and the core part 21Aa to be smaller.

More preferably, the cavity surface of the gate bushing 100 has a diameter R₃ being substantially the same as the external diameter R₁ of the lens and greater than the optical effective diameter R₂ of the lens. In other words, the diameter R₃ satisfies "R₂<R₃=R₁", so that the optical effective diameter R₂ can be sufficiently great against the configuration of the molded article without forming the sharp edge. In addition, it is not always necessary for the cavity surface of the gate bushing 100 to be exactly the same as the external diameter R₁ of the lens. As long as the cavity surface of the gate bushing 100 is substantially the same as the external diameter R₁ of the lens, the cavity surface of the gate bushing 100 may be slightly greater or smaller than the external diameter R₁ of the lens.

In other words, by forming the lower surface of the gate bushing 100 forming a part of the cavity forming part 52 so that a part of the lower surface of the gate bushing 100 has a designated curvature corresponding to the configuration of the core part 21Aa, it is possible to mold the molded article having a main surface whose external configuration is circular shaped. Especially, it is possible to correspond to a case where the value of the optical effective diameter R₂ is close to the value of the external diameter R₁ of the lens, and therefore to mold the lens having a greater optical effective diameter R₂.

In the structure shown in FIG. 9-(D), the gap having a length greater than 0 and smaller than approximately 0.1 mm, is formed between the cavity surface of the gate bushing 100 and the external configuration of the core part 21Aa. In the structure shown in FIG. 9-(A) through FIG. 9-(C), the gap having a length greater than 0 and smaller than approximately 0.1 mm, may be formed between the cavity surface of the gate bushing 100 and the external configuration of the core part 21Aa. Here, in the example shown in FIG. 9-(A) through FIG. 9-(C), a part of the core part 21Aa corresponding to the gate bushing 100 as corresponding to the molded article is linearly formed.

In this example, as well as the embodiment discussed above, while the pin 61a projects from a top part of a curved surface of the gate bushing 100 forming a part of the cavity 52 to a side of the cavity forming part 52, the pin 61a is controlled so as to stop at a position not reaching an optical effective area of the lens, namely an area defined by the optical effective diameter R₂.

The present invention is not limited to these embodiments, but variations and modifications may be made without departing from the scope of the present invention.

For example, in the above-discussed embodiment, the gate shutting pin moves in a direction perpendicular to the opening and closing direction of the molding device. However, the present invention is not limited to this example. For example, the present invention can be applied a case where the gate shutting pin moves in a direction parallel with the opening and closing direction of the molding device.

### SUMMARY OF THE INVENTION

1. A resin molding method for molding an optical component having an effective part where light is transmitted and a circumferential part provided at a circumference of the effective part, the resin molding method comprising the steps of:
   retracting a gate shutting pin so that resin is supplied in a cavity forming part of a mold apparatus;
   extending the gate shutting pin to inside the circumferential part of the optical component formed by making the resin solid in the cavity forming part, and stopping the gate shutting pin outside the effective part;
   cooling the resin in the cavity forming part so that the resin is made solid;
   retracting the pin to an outside the circumferential part of the optical component; and
   opening the mold apparatus so that the optical component is taken out.
2. The resin molding method as in 1;
   wherein the gate shutting pin is moved in a direction perpendicular to or parallel with opening and closing directions of the mold apparatus.
3. The resin molding method as in 1 or 2;
   wherein, in the step of retracting the gate shutting pin, the position where the gate shutting pin is stopped is a position where a gate can be shut.
4. A mold apparatus for injection molding an optical component having an effective part where light is transmitted and a circumferential part provided at a circumference of the effective part, the mold apparatus comprising:
   a movable mold and a stationary mold configured to form a cavity forming part, the cavity forming part defining an external configuration of the optical component when the mold apparatus is closed;
   a gate configured to open at a parting surface of the stationary mold; and
   a pin movably provided in the gate, the pin being configured to open and shut the gate;
   wherein a position of the pin is controlled so that the pin projects from the parting surface to a side of the cavity forming part but stops in an area where the pin does not reach the effective part.
5. The mold apparatus as in 4, further comprising:
   a driving part configured to drive the pin;
   wherein the driving part makes the pin move so that the pin shuts the gate and projects from the parting surface to the cavity forming part, and makes the pin move outside of the parting surface while the gate is kept shut.
6. The mold apparatus as in 4, further comprising:
   a first driving part and a second driving part, the driving parts being configured to drive the pin;
   wherein the first driving part makes the pin move so that the pin shuts the gate and projects from the parting surface to the cavity forming part, and
   the second driving part makes the pin move outside of the parting surface while the gate is kept shut.
7. The mold apparatus as in 6,
   wherein the first driving part and the second driving part are reciprocating air cylinders.
8. A mold apparatus for molding an optical component having an effective part where light is transmitted and a circumferential part provided at a circumference of the effective part, the mold apparatus comprising:
   a core configured to form an effective surface of the optical component when the mold apparatus is closed;
   a gate configured to open at a parting surface of a stationary mold;
   a pin moyably provided in the gate, the pin being configured to open and shut the gate; and
   a gate bushing provided at a circumference of the gate and supporting a head end of the gate;
   wherein at least a part of a cavity surface of the gate bushing forming a part of the cavity forming part has a configuration corresponding to a configuration of the core.
9. A gate bushing provided in a mold apparatus, the gate bushing supporting a head end of a gate, the gate having an inside where a pin is movably provided, the pin being configured to open and shut the gate, the gate bushing comprising:
   a cavity surface forming a part of a cavity forming part formed inside of the mold apparatus;
   wherein at least a part of the cavity surface has a curved surface having a configuration corresponding to a configuration of a core forming an effective surface of an optical component, the optical component being molded by using the mold apparatus.

## Claims

1. A mold apparatus for molding an optical component having an effective part where light is transmitted and a circumferential part provided at a circumference of the effective part, the mold apparatus comprising:
a core configured to form an effective surface of the optical component when the mold apparatus is closed;
a gate configured to open at a parting surface of a stationary mold;
a pin movably provided in the gate, the pin being configured to open and shut the gate; and
a gate bushing provided at a circumference of the gate and supporting a head end of the gate;
wherein at least a part of a cavity surface of the gate bushing forming a part of the cavity forming part has a configuration corresponding to a configuration of the core.

2. A gate bushing provided in a mold apparatus, the gate bushing supporting a head end of a gate, the gate having an inside where a pin is movably provided, the pin being configured to open and shut the gate, the gate bushing comprising:
a cavity surface forming a part of a cavity forming part formed inside of the mold apparatus;
wherein at least a part of the cavity surface has a curved surface having a configuration corresponding to a configuration of a core forming an effective surface of an optical component, the optical component being molded by using the mold apparatus.
